# EUROPEAN PATENT APPLICATION

(11) **EP 1 815 917 A2**
(43) Date of publication of application: **08.08.2007**
(21) Application number: 07101630.7
(22) Date of filing: 02.02.2007
(51) Int. Cl.: B08B 15/00

(54) **A device for the abatement of fumes and odours from the gaseous effluent of industrial kitchens**

(30) Priority: 07.02.2006 IT FI20060006
(71) Applicant: Target Catering Equipment S.r.l., 55060 Capannori (Lucca) (IT)
(72) Inventor: Maffei, Liano, 55060 Lucca (IT)
(74) Representative: Bardini, Marco Luigi

(57) **Abstract**

A device for abatement of fumes and odours from the gaseous effluent coming from industrial kitchens, comprising a tubular body (3) with inside thereof a plurality of filtering plates (5) stacked and spaced in relation to one another and a distributor plate (4) for a washing liquid (L) above said filtering plates, a vessel (1) for conveying of said effluent closed at the top side and containing said tubular support, a vessel (1a) for collecting the washing liquid communicating with the conveying vessel and a circulation pump (7) for the washing liquid which takes the latter from the collection vessel and feeds it over the distributor plate. Means (6) are then provided to convey and feed the gaseous effluent via the filtering plates creating a rising gaseous flow in counter-current with the washing liquid, the feed pressure of the gaseous effluent being such as to ensure a head of liquid on each plate.

## Description

The present invention relates to a device for the abatement of fumes and odours from the gaseous effluent of industrial kitchens.

As is known, the large quantity of fumes and steam arising from the food cooking process must be constantly removed from kitchens or from areas used for cooking food in order to maintain the working conditions of staff at acceptable levels, and in any case to comply with existing law requirements. For this purpose fumes and vapours are constantly sucked and conveyed to the outside through suitable conduits. Even if this effluent is discharged beyond the top of the roofs, as laid down by the various laws on the subject, it is impossible to prevent the various odours, often unpleasant due to the fact that they are mixed, from diffusing in the environment surrounding the outside discharge point or from being transported by air currents into even relatively distant areas, according to the weather conditions, without having sufficient time for their dilution in the air and therefore causing serious disturbance and inconvenience. The presently available odours abatement systems, for example using active carbon filters or ion exchange resins, are very expensive both in terms of installation and of maintenance and therefore, if adopted, eventually have a considerable effect on production costs.

The object of the present invention is therefore to provide a device which is both economical and effective for the abatement of fumes and odours contained in the gaseous effluent from industrial kitchens.

Another object of the present invention is to provide a device for the abatement of fumes and odours of the above mentioned type that can be built in an extremely compact form in order to allow its installation also in areas with low availability of space or on mobile structures.

This object is achieved with the device for abatement of fumes and odours whose essential features are claimed in claim 1.

The invention will now be illustrated in greater detail with the following description of one of its embodiments, given by way of a non-limiting example with reference to the accompanying drawing, in which:
- Figure 1 shows a schematic section of the fumes and odours abatement device according to the invention;
- Figure 2 shows the installation of the device according to the invention on a wheeled cooker.

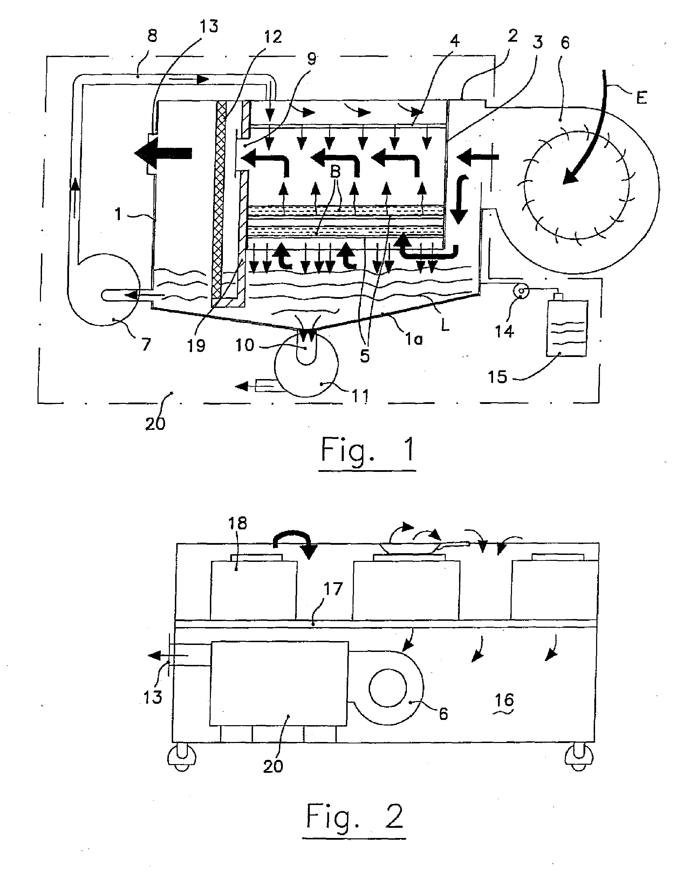

Referring to Figure 1, the fumes and odours abatement device according to the present invention comprises a vessel 1 closed at its top by a cover 2 and a tubular body 3 that extends from cover 2 inside vessel 1 and supports in its interior a perforated distributor plate 4 and a battery of filtering plates 5, stacked and spaced in relation to each other, in particular formed by panels in multilayer steel netting. In the present embodiment two filtering plates are provided although it is obvious that the number of plates may differ. The filtering capacity of the two plates may be different, which can be obtained by varying the width of the meshes. The gaseous effluent E, coming from a cooking area, is fed into the vessel 1 via a fan 6, conveyed to said fan via a suitable conduit, not shown.

A circulation pump 7 draws the washing liquid from the base 1a of the vessel 1 and feeds it to the perforated plate 4 via a delivery pipe 8. The plate 4 is evenly perforated to allow distribution of the washing liquid over the entire section of the tubular body 3.

The gaseous effluent E enters the tubular body 3 from below, traversing the filtering plates 5 and the head of liquid B which is established thereon. A wall 19 divides the vessel 1 into two chambers, inlet chamber and outlet chamber respectively, the tubular body 3 being placed in the inlet chamber so as to prevent the effluent to be treated from bypassing the filtering plates 5. The outlet chamber communicates with the inlet chamber only via the tubular body 3 and a nozzle 9 for the treated gaseous effluent extending radially therefrom immediately below the distributor plate 4.

A drain conduit 10 is provided at the bottom of the vessel 1 so as to discharge the washing liquid L during periodical maintenance work, possibly via a discharge pump 11. The treated effluent, before leaving the vessel 1, is passed through a drip separator diaphragm 12 for the abatement of any washing liquid residues possibly conveyed by the effluent gas. The effluent treated in this way is then conveyed to the outside via an outlet nozzle 13 of the vessel 1.

The washing liquid may be composed of an aqueous solution of sodium hypochlorite possibly with the addition of deodorant substances or with specific chemical reagents. The hypochlorite and any other reagents or additives may be periodically reintegrated with the washing liquid manually or automatically by means of a metering pump 14 which takes them from a small tank 15.

The pressure of the gaseous effluent to be treated entering the vessel 1 must be such as to ensure the formation of a small head of liquid on the distributor plate 4 and on the filtering panels 5 for scrubbing of the gaseous effluent in the washing solution. The counter-current flow created in this way and the close liquid-gas contact promoted by the filtering panels 5 allow complete washing of the gaseous effluent and the passage into the washing liquid of all the substances responsible for the effluent odours. The purification capacity of the device is close to 100%, which allows the treated gaseous effluent to be discharged into the atmosphere or, if necessary, re-circulated in the same cooking area.

In addition to obtaining the best results in terms of efficiency of purification at a much lower cost, the device according to the invention has, compared to known treatment systems, the advantage of being self-cleaning, of not requiring regeneration or a change of filters and of only requiring a minimum of maintenance consisting of the periodical replacement of washing liquid and/or reintegration of the components of this solution.

The device according to the present invention is also particularly advantageous due to its compactness which allows its installation in any room and place and also on mobile structures such as a wheeled cooker, such as the one shown, by way of an example, in Figure 2. In it the fumes and odours abatement device, generally denoted by 20, and the relative fan 6 are placed in a space 16 below a grilled cooking plane 17 on which burners 18 are arranged. The cooking fumes are aspirated through the grilled plane 17 and fed to the abatement device 20 and the treated and odourless effluent is returned into the same environment (for example the dining room of a hotel or a restaurant) in which the wheeled cooker is used.

Since in the present embodiment of the invention the collection vessel 1a of the washing liquid is formed by the base of the vessel 1 for conveying the gaseous effluent, the collection vessel may, should this be useful from the point of view of installation of the device, be separate from the conveying vessel and be connected to the latter via an appropriate hydraulic circuit.

Various modifications and alterations to the invention may be appreciated on a review of the disclosure. These changes and additions are intended to be within the scope and spirit of the invention as defined by the following claims.

## Claims

1. A device for the abatement of fumes and odours in a gaseous effluent coming from industrial kitchens, **characterised in that** it comprises a vessel (1) for conveying said gaseous effluent, closed at its top side, a tubular body (3) placed in said conveying vessel (1) and housing a plurality of filtering plates (5) stacked and spaced in relation to each other and a washing liquid (L) distributor plate (4) above said filtering plates, a vessel (1a) for collection of the washing liquid (L) communicating with said conveying vessel (1), a pump (7) for circulation of the washing liquid, which takes the latter from said collection vessel (1) and to feeds it over said distributor plate (4), and means (6) for conveying and feeding said gaseous effluent through said filtering plates (5) creating a rising gaseous flow in counter-current with the washing liquid, the feed pressure of said gaseous effluent being such as to ensure a head of liquid on each plate (5).

2. Abatement device according to claim 1, wherein said filtering plates (5) are formed by panels in metal netting.

3. Abatement device according to claim 2, wherein said netting has meshes with a section that varies from plate to plate in order to have a different filtering capacity.

4. Abatement device according to any one of the previous claims, wherein said vessel (1a) for the collection of washing liquid is formed at the bottom of the vessel (1) for conveying the gaseous effluent.

5. Abatement device according to any one of claims 1 to 3, wherein said washing liquid vessel (1a) is separate from said conveying vessel (1) and communicates hydraulically therewith.

6. Abatement device according to any one of the previous claims, wherein said means for conveying and feeding said gaseous effluent comprise a conduit for collection of the fumes from the cooking area and for conveying them towards a feed fan (6).

7. Abatement device according to any one of the previous claims, wherein said vessel (1) for conveying the gaseous effluent is divided into two chambers, an inlet cahmber and an outlet chamber, communicating one with the other via said tubular body (3) which is placed inside said inlet chamber.

8. Abatement device according to any one of the previous claims, wherein the conduit (9) for extraction of the gaseous effluent from said tubular body (3) is positioned below said distributor plate (4).

9. Abatement device according to any one of the previous claims, wherein said washing liquid is an aqueous solution of sodium hypochlorite.

10. Abatement device according to any one of the previous claims, **characterised in that** it is mounted on a wheeled cooker.
